# EUROPEAN PATENT APPLICATION

(11) **EP 2 799 960 A1**
(43) Date of publication of application: **05.11.2014**
(21) Application number: 14165293.3
(22) Date of filing: 18.04.2014
(51) Int. Cl.: G06F 3/041, G06F 1/32, G06F 3/0354

(54) **Touch-sensitive electronic device and touch module of the same**

(30) Priority: 02.05.2013 TW 102115751
(71) Applicant: Pegatron Corporation, Taipei City 112 (TW)
(72) Inventor: Wang, Jing-Rung, 112 Taipei City (TW); Hwang, Shyh-Heh, 112 Taipei City (TW); Yu, Chia-Hsing, 112 Taipei City (TW)
(74) Representative: Altenburg, Bernardus Stephanus Franciscus

(57) **Abstract**

The disclosure provides a touch-sensitive electronic device and a touch module thereof. The touch-sensitive electronic device includes a touch module and a power supply module. The touch module includes a touch panel, a touch-sensitive area and a signal processing module. The touch-sensitive area is for receiving the touch of a user to generate a touch signal. The signal processing module is electrically connected with the touch-sensitive area for processing the touch signal to generate the control signal to control the touch-sensitive electronic device. The power supply module is electrically connected to the touch module for continuously supplying power to the signal processing module and the touch-sensitive area; wherein the touch-sensitive area can receive the touch of the user to generate the touch signal when the touch panel is activated or not activated.

## Description

### BACKGROUND OF THE INVENTION

### Field of Invention

The invention relates to a touch-sensitive electronic device and a touch module of the same and, in particular, to a touch-sensitive electronic device and a touch module of the same which can be operated under a power-off state.

### Related Art

Along with the progress of technology, electronic devices with touch control functionalities have become popular and widely used. A user can control an electronic device, such as a tablet computer or a smartphone, via touch control more intuitively. However, in the prior art, an electronic device must have physical buttons for the operation of certain functions, such as the power on or off of the electronic device. Since the button is provided on the electronic device physically, the position of the physical button cannot be changed easily, and the housing of the electronic device needs to be re-designed of the position of the physical button need to be changed. Such a re-design causes substantial increase in costs. Moreover, dust and moist would penetrate the gaps of the physical button easily. Therefore, how to design a physical button with a dustproof and waterproof design is an issue for an electronic device with dustproof and waterproof requirements.

Therefore, a new touch-sensitive electronic device and its touch module are needed to solve the issues in the prior art.

### SUMMARY OF THE INVENTION

An objective of the invention is to provide a touch-sensitive electronic device, which has the feature of being operated under the power-off state.

Another objective of the invention is to provide a touch module for the touch-sensitive electronic device mentioned above.

To achieve the above objectives, the touch-sensitive electronic device of the invention includes a touch module and a power supply module. The touch module includes a touch panel, a touch-sensitive area and a signal processing module. The touch-sensitive area is for receiving the touch of a user to generate a touch signal. The signal processing module is electrically connected with the touch-sensitive area for processing the touch signal to generate the control signal to control the touch-sensitive electronic device. The power supply module is electrically connected to the touch module for continuously supplying power to the signal processing module and the touch-sensitive area; wherein the touch-sensitive area can receive the touch of the user to generate the touch signal when the touch panel is activated or not activated.

The touch module is for the use in the touch-sensitive electronic device and receives power from a power supply module. The touch module includes a touch panel, a touch-sensitive area and a signal processing module. The touch-sensitive area is for receiving the touch of a user to generate a touch signal. The signal processing module is electrically connected with the touch-sensitive area for processing the touch signal to generate the control signal to control the touch-sensitive electronic device; wherein the signal processing module and the touch-sensitive area receive power from the power supply module continuously; wherein the touch-sensitive area can receive the touch of the user to generate the touch signal both when the touch panel is activated or not activated.

### BRIEF DESCRIPTION OF THE DRAWINGS

FIG. 1 is a circuit architecture diagram of the touch-sensitive electronic device according to an embodiment of the invention.
FIG. 2 is a front view of the appearance of the touch-sensitive electronic device according to the embodiment of the invention.
FIG. 3 is a perspective schematic diagram of the touch-sensitive electronic device according to the embodiment of the invention.

### DETAILED DESCRIPTION OF THE INVENTION

The present invention will be apparent from the following detailed description, which proceeds with reference to the accompanying drawings, wherein the same references relate to the same elements.

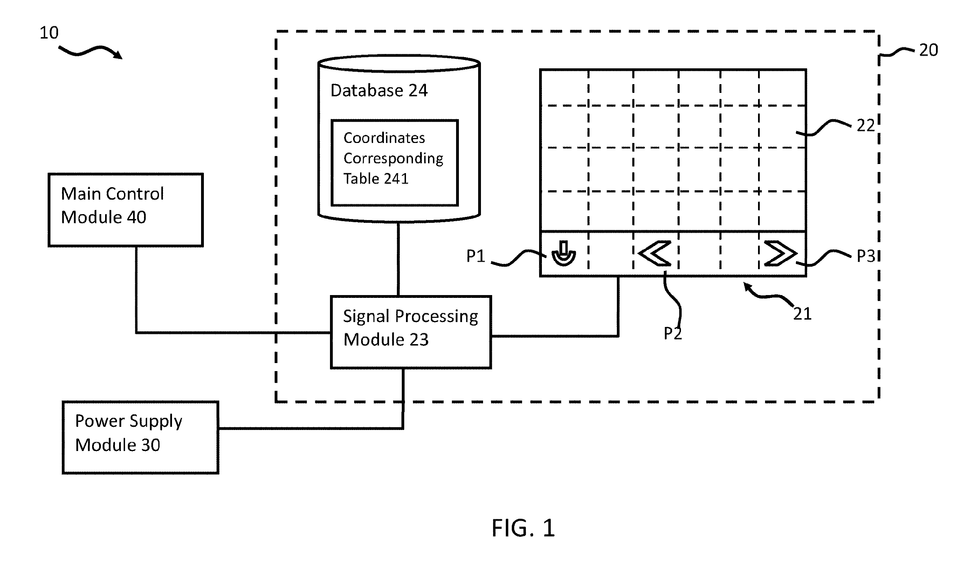

Please refer to FIG. 1, which is a circuit architecture diagram of the touch-sensitive electronic device according to an embodiment of the invention.

The touch-sensitive electronic device 10 of the embodiment may be a tablet computer or a smartphone; the invention is not limited therein. The touch-sensitive electronic device 10 includes a touch module 20, a power supply module 30 and a main control module 40. The touch module 20 is for a user to control the touch-sensitive electronic device 10 by touching the device. The power supply module 30 is for supplying power to the touch module 20 and the main control module 40, so that the touch module 20 and the main control module 40 can operate. The power supply module 30 may be a plug for connecting to the mains to supply AC power, or a battery module for supplying DC power; the invention is not limited therein. The main control module 40 may include hardware, firmware combined with hardware, or software combined with hardware, such as the power management chip of the touch-sensitive electronic device 10; the invention is not limited therein. The main control module 40 is for executing the process during the power-on procedure of the touch-sensitive electronic device 10, or for executing functions after the power-on of the touch-sensitive electronic device 10. Since the operation of the main control module 40 under the power-on state is not the key point of the improvement of the invention, the relevant details are omitted here for concise purpose.

The touch module 20 includes a touch-sensitive area 21, a touch panel 22, a signal processing module 23 and a database 24. The touch-sensitive area 21 and the touch panel 22 are for receiving the touch of the user to generate a touch signal, while the touch panel 22 is also for displaying a picture. The touch-sensitive area 21 and the signal processing module 23 receive power from the power supply module 30 continuously, and the power is supplied separately from that of the touch panel 22. Therefore, the touch-sensitive area 21 can operate normally regardless of whether the touch panel 22 is activated or not. On the other hand, even when the touch-sensitive electronic device 10 is under a power-off or a sleep state, the power supply module 30 still supplies power to the touch-sensitive area 21 and the signal processing module 23. The types of the touch-sensitive area 21 and the touch panel 22 may be capacitive type, resistive type or other touch-sensitive type, the invention is not limited therein. The touch-sensitive area 21 may be a portion of the touch panel 22, or other component disposed on the touch-sensitive electronic device 10, the invention is not limited therein. An operational symbol may be printed on the surface of the touch-sensitive area 21 to inform the user of the function of this touch-sensitive area 21. For example, control buttons P1, P2 and P3 may be printed directly for the clear identification to the user. Different control buttons P1, P2 and P3 on the touch-sensitive area 21 correspond to different functions, such as power-on/off or volume adjustments. As a result, the user can still operate the touch-sensitive area 21 even when the touch-sensitive electronic device 10 is under its power-off state. Note that the touch panel 22 may be controlled by the signal processing module 23, or by the main control module 40 after the touch-sensitive electronic device 10 is turned on. The invention does not limit the way the touch panel 22 is controlled.

The signal processing module 23 is a microprocessor, which architecture includes hardware or a combination of firmware and hardware. The signal processing module 23 is electrically connected with the touch-sensitive area 21 and the main control module 40 for processing the touch signal from the touch-sensitive area 21 and then generating a corresponding control signal to the main control module 40 to control the touch-sensitive electronic device 10. Moreover, the touch module may include a database 24. The database 24 is for storing a coordinates corresponding table 241. The database 24 is electrically connected with the signal processing module 23. When the touch-sensitive area 21 is a portion of the touch panel 22, if the touch-sensitive area 21 is touched, the signal processing module 23 receives the coordinate of the touch signal, and queries the coordinates corresponding table 241 to identify whether the touch signal is a touch signal generated by the touch-sensitive area 21 to generate a corresponding control signal accordingly.

Therefore, a user can operate the touch-sensitive area 21 anytime. For example, the user can touch the control button P1 on the touch-sensitive area 21 to generate a power-on touch signal when the touch panel 22 is activated or not activated, or when the touch-sensitive electronic device 10 is turned off or in a sleeping state. The signal processing module 23 generates the power-on control signal from the power-on touch signal to wake up the main control module 40 and initiate the power-on procedure of the touch-sensitive electronic device 10. On the other hand, if the touch-sensitive electronic device 10 is under its sleep state, the user can touch the control buttons P2 and P3 to adjust the volume without waking up the main control module 40 of the touch-sensitive electronic device 10 to reduce the energy consumed by the touch-sensitive electronic device 10. The control methods mentioned above are for exemplary purpose only; the invention does not limited by the exemplary control methods.

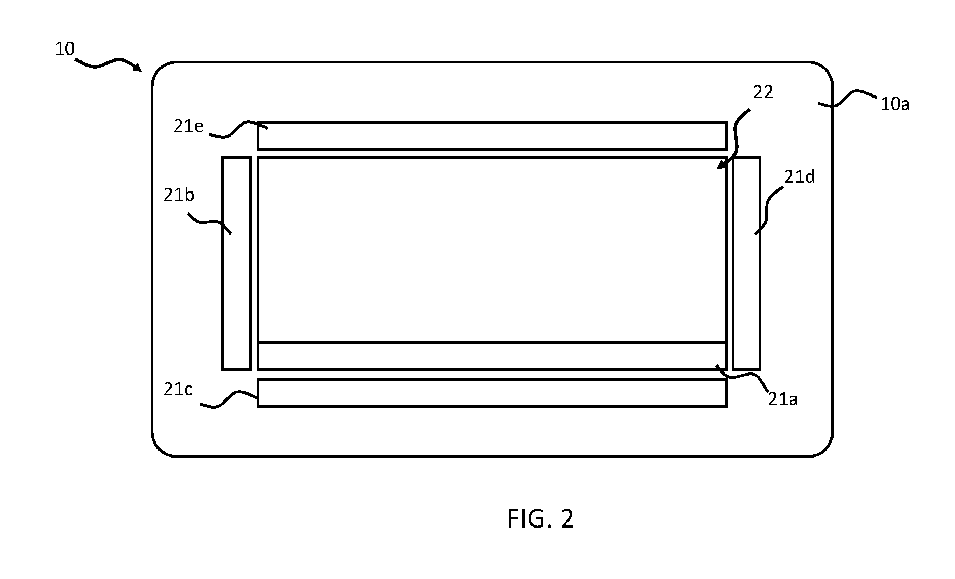

Please refer to FIG. 2, which is a front view of the appearance of the touch-sensitive electronic device according to the embodiment of the invention.

The touch pane 22 is disposed at the front surface 10a of the touch-sensitive electronic device 10 to display pictures and allow the user's operations. The touch-sensitive area 21 may be provided at a portion of the touch panel 22, such as the touch-sensitive area 21a shown in FIG. 2.

Moreover, the touch-sensitive area 21 may be at least provided at the top, bottom, left or right side of the touch panel 22, such as the touch-sensitive areas 21b to 21e shown in FIG. 2. Alternatively, the touch-sensitive area 21 may be provided at two adjacent edges to form an L-shaped touch area, such as the touch-sensitive areas 21b to 21c shown in FIG. 2, or be provided at three edges to form a U-shaped touch area, such as the touch-sensitive areas 21b to 21d shown in FIG. 2. The invention is not limited to the above-mentioned examples.

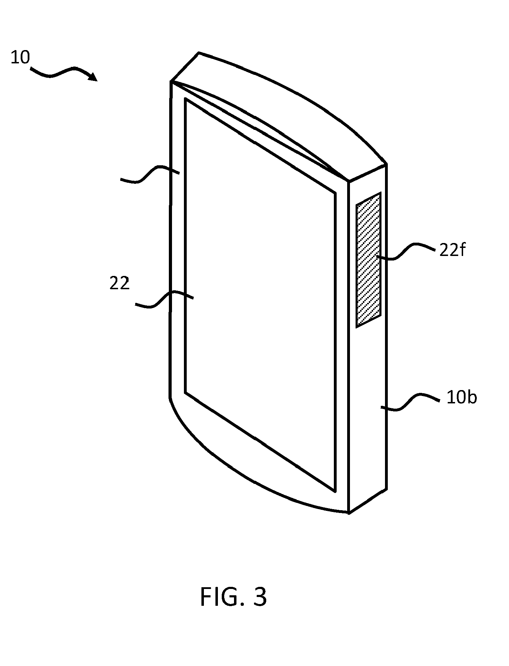

Please refer to FIG. 3, which is a perspective schematic diagram of the touch-sensitive electronic device according to the embodiment of the invention.

The position of the touch-sensitive area 21 is not limited by the positions shown in FIG. 2. As shown in FIG. 3, a touch-sensitive area 21f may be provided at the side surface 10b of the touch-sensitive electronic device 10 for the user to operate directly. By this way, it is not necessary for the appearance of the touch-sensitive electronic device 10 to have any physical button. Therefore, the objectives of dustproof and waterproof can be achieved. Furthermore, the touch-sensitive area 21 of the touch-sensitive electronic device 10 may operate normally when some of the modules are shut down or when the touch panel 22 is not activated. Therefore, the objective of power consumption reduction can be achieved.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A touch-sensitive electronic device (10), comprising:
a touch module (20), including:
a touch panel (22) for displaying a picture;
a touch-sensitive area (21) for receiving a touch of a user to generate a touch signal; and
a signal processing module (23) electrically connected with the touch-sensitive area (21) for processing the touch signal to generate a control signal to control the touch-sensitive electronic device (10); and
a power supply module (30) electrically connected with the touch module (20) for continuously supplying power to the signal processing module (23) and the touch-sensitive area (21),
wherein the touch-sensitive area (21) can receive the touch of the user to generate the touch signal when the touch panel (22) is activated or not activated.

2. The touch-sensitive electronic device (10) according to claim 1, wherein the touch module (20) further comprises a database for storing a coordinates corresponding table, the database is electrically connected with the signal processing module (23); when the signal processing module (23) receives the touch signal, the signal processing module (23) queries the coordinates corresponding table to generate the control signal correspondingly.

3. The touch-sensitive electronic device (10) according to claims 1 or 2, wherein when the touch-sensitive electronic device (10) is under a power-off state, the touch-sensitive area (21) still can allow the user to operate to generate the touch signal, so that the signal processing module (23) generates the control signal accordingly to control the touch-sensitive electronic device (10).

4. The touch-sensitive electronic device (10) according to claim 3, wherein the touch-sensitive area (21) comprises a power-on control button (P1), when the touch-sensitive electronic device (10) is under the power-off state, the power-on control button (P1) still can be operated by the user so that the signal processing module (23) generates a power-on control signal accordingly to control the touch-sensitive electronic device (10) to execute the power-on procedure.

5. The touch-sensitive electronic device (10) according to claims 1 or 2, wherein the touch-sensitive area (21) comprises a volume control button (P2, P3), when the touch-sensitive electronic device (10) is under a sleep state, the volume control button (P2, P3) still can be operated by the user.

6. The touch-sensitive electronic device (10) according to claims 1 or 2, wherein the touch-sensitive area (21) is provided at a portion of the touch panel (22).

7. The touch-sensitive electronic device (10) according to claims 1 or 2, wherein the touch-sensitive area (21) is provided at one of the top, bottom, left or right side of the touch panel (22).

8. The touch-sensitive electronic device (10) according to claims 1 or 2, wherein the touch-sensitive area (21) is provided at a side surface of the touch-sensitive electronic device.

9. A touch module (20) for a touch-sensitive electronic device (10) and receiving power form a power supply module, the touch module (20) comprising:
a touch panel (22) for displaying a picture;
a touch-sensitive area (21) for receiving a touch of a user to generate a touch signal; and
a signal processing module (23) electrically connected with the touch-sensitive area (21) for processing the touch signal to generate a control signal to control the touch-sensitive electronic device (10);
wherein the signal processing module (23) and the touch-sensitive area (21) receive power from the power supply module (30) continuously;
wherein the touch-sensitive area (21) can receive the touch of the user to generate the touch signal both when the touch panel (22) is activated or not activated.

10. The touch module (20) according to claim 9, further comprising:
a database for storing a coordinates corresponding table, the database is electrically connected with the signal processing module (23); when the signal processing module (23) receives the touch signal, the signal processing module (23) queries the coordinates corresponding table to generate the control signal correspondingly.

11. The touch module (20) according to claims 9 or 10, wherein when the touch-sensitive electronic device (10) is under a power-off state, the touch-sensitive area (21) still can allow the user to operate to generate the touch signal, so that the signal processing module (23) generates the control signal accordingly to control the touch-sensitive electronic device (10).

12. The touch module (20) according to claim 11, wherein the touch-sensitive area (21) comprises a power-on control button, when the touch-sensitive electronic device (10) is under the power-off state, the power-on control button (P1) still can be operated by the user so that the signal processing module (23) generates a power-on control signal accordingly to control the touch-sensitive electronic device (10) to execute the power-on procedure.

13. The touch module (20) according to claims 9 or 10, wherein the touch-sensitive area (21) comprises a volume control button, when the touch-sensitive electronic device (10) is under a sleep state, the volume control button (P2, P3) still can be operated by the user.

14. The touch module (20) according to claims 9 or 10, wherein the touch-sensitive area (21) is provided at a portion of the touch panel.

15. The touch module (20) according to claims 9 or 10, wherein the touch-sensitive area (21) is provided at a side surface of the touch-sensitive electronic device (10).
